# EUROPÄISCHE PATENTSCHRIFT

(11) **EP 3 213 402 B1**
(45) Veröffentlichungstag und Bekanntmachung des Hinweises auf die Patenterteilung: **11.11.2020**
(21) Anmeldenummer: 15763848.7
(22) Anmeldetag: 02.09.2015
(51) Int. Cl.: H02P 6/08, H02K 29/08, H02P 6/16, H02K 1/27

(54) **STELLANTRIEB MIT EINEM BÜRSTENLOSEN ZWEIPHASEN-GLEICHSTROMMOTOR SOWIE VERWENDUNG EINES DERARTIGEN GLEICHSTROMMOTORS**
ACTUATOR WITH A BRUSHLESS TWO PHASE DIRECT CURRENT MOTOR AND USE OF SUCH A DIRECT CURRENT MOTOR
MÉCANISME DE COMMANDE DOTÉ D'UN MOTEUR À COURANT CONTINU BIPHASÉ SANS BROSSE ET UTILISATION D'UN TEL MOTEUR À COURANT CONTINU

(30) Priorität: 30.10.2014 EP 14191163
(43) Veröffentlichungstag der Anmeldung: 06.09.2017
(73) Patentinhaber: Siemens Schweiz AG, 8047 Zürich (CH)
(72) Erfinder: HUWILER, Adrian, CH-6038 Honau (CH); SOLTERMANN, Sacha, CH-6340 Baar (CH)
(74) Vertreter: Maier, Daniel Oliver
(86) Internationale Anmeldenummer: PCT/EP2015/070052
(87) Internationale Veröffentlichungsnummer: WO 2016/066307

(56) Entgegenhaltungen:
- EP-A1- 0 234 663
- EP-A1- 2 573 932
- WO-A2-2005/119898
- DE-A1- 3 221 048
- US-A- 4 710 684
- US-A- 4 737 674

## Beschreibung

Die vorliegende Erfindung betrifft einen Stellantrieb für eine Klappe oder für ein Ventil zum Einstellen eines gasförmigen oder flüssigen Volumenstroms, insbesondere zum Heizen, Lüften oder Klimatisieren eines Gebäudes. Der Stellantrieb weist einen bürstenlosen Gleichstrommotor, ein dem Gleichstrommotor nachgeschaltetes Reduziergetriebe sowie einen getriebeseitigen Abtrieb für die Klappe oder für das Ventil auf. Der Stellantrieb umfasst weiterhin eine Motorsteuereinheit zur Ansteuerung des Gleichstrommotors sowie eine Spannungsversorgungseinheit. Der Gleichstrommotor weist einen Stator mit Ankerspulen sowie einen relativ zum Stator drehbar gelagerten Rotor mit sich in Umfangsrichtung abwechselnden Permanentmagnetpolen auf.

Aus dem US-Patent 4,710,684 ist eine Treiberschaltung für einen bürstenlosen Gleichstrommotor mit einem als Vierfach-T-Anker ausgebildeten Stator und mit einem radial aussenliegenden Rotor mit sechs Permanentmagnetpolen bekannt.

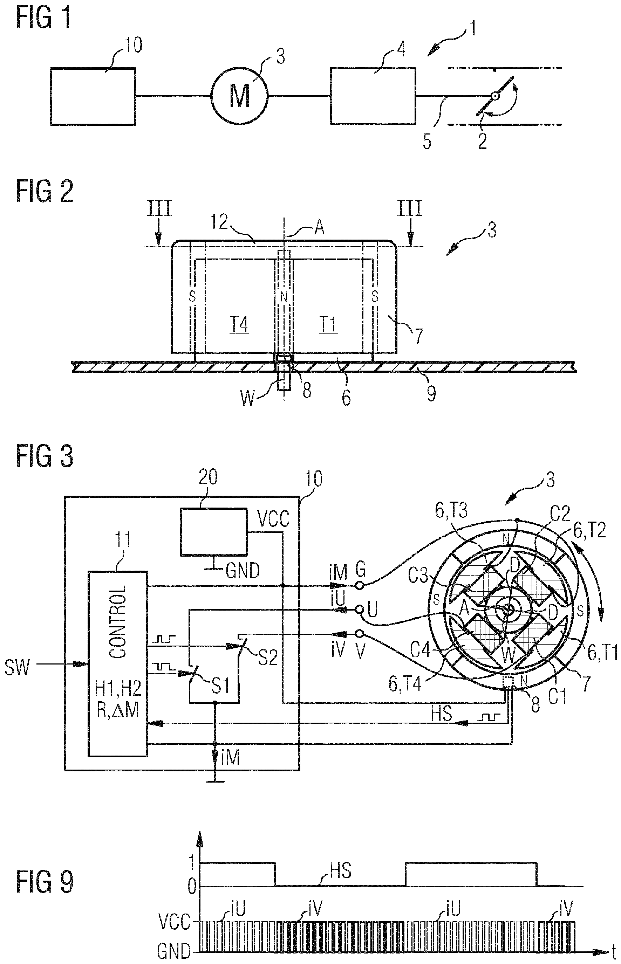

Aus dem US-Patent 4,737,674 ist ein bürstenloser Einphasen-Gleichstrommotor bekannt. In der dortigen FIG. 2 ist ein bürstenloser Gleichstrommotor mit einem als Vierfach-T-Anker ausgebildeten Stator und mit einem aussenliegenden Rotor mit vier Permanentmagnetpolen für nur eine Drehrichtung gezeigt. Die T-Anker sind unsymmetrisch ausgeformt und bilden einen in Umfangsrichtung zunehmenden Luftspalt zum gegenüberliegenden Rotor aus, um einen Selbststart des Motors zu ermöglichen.

Der Rotor ist im Vergleich zum Stator radial aussenliegend. Weiterhin ist der Rotor mit einer Federeinrichtung verbunden, mittels derer der Rotor in dem Fall, dass er aus einer Ruhelage ausgelenkt ist, mit einer rücktreibenden Kraft beaufschlagt ist. Dadurch ist bei Ausfall der Spannungsversorgung für den Stellantrieb noch ein sicheres Schliessen der Klappe oder des Ventils möglich. Die Motorsteuereinheit weist elektrisch ansteuerbare Schaltmittel als Stelleinrichtung für den Gleichstrommotor zur Aufbringung eines Drehmoments mit vorgebbarer Drehrichtung auf. Sie ist zudem dazu eingerichtet, die Ankerspulen entsprechend der vorgegebenen Drehrichtung sowie in Abhängigkeit der Drehstellung des Rotors über die Schaltmittel an die Spannungsversorgungseinheit zu schalten. Der Rotor des Gleichstrommotors ist ferner mit einer Federeinrichtung verbunden, mittels derer der Rotor in dem Fall, dass er aus einer Ruhelage ausgelenkt ist, mit einer rücktreibenden Kraft beaufschlagt ist.

Bei Gleichstrommotoren muss im Betrieb eine Kommutierung der Phasen erfolgen. Die Anschaltung der Phasen des Gleichstrommotors ist also unter anderem von der Drehstellung eines Rotors des Gleichstrommotors abhängig. Die Kommutierung bewirkt die korrekte Bestromung der Phasen des Gleichstrommotors.

Die Kommutierung kann mittels sogenannter Kommutierungsbürsten erfolgen. Diese Ausgestaltung ist jedoch verschleissbehaftet. Im Stand der Technik erfolgt die Kommutierung daher in der Regel elektronisch. Die Ermittlung bzw. Erfassung der Drehstellung des Rotors kann z.B. mittels sogenannter Hallsensoren erfolgen. Dieses Prinzip ist z.B. aus der Veröffentlichung der US-Patentanmeldung 2005/0001570 A1 bekannt.

Aus den Internationalen Veröffentlichungen WO 2005/119898 A2 und WO 2013/045186 A2 sind weitere Stellantriebe bekannt, die eine Ermittlung der Drehstellung des Rotors ohne Sensoren erlauben.

Ausgehend von dem eingangs genannten Stand der Technik ist es eine Aufgabe der Erfindung, einen Stellantrieb anzugeben, welcher technisch weniger aufwändig und zugleich kostengünstiger ist.

Die Aufgabe der Erfindung wird mit den Merkmalen des Hauptanspruchs gelöst. Vorteilhafte Ausführungsformen sind in den abhängigen Ansprüchen genannt.

Der Kern der Erfindung liegt in der Verwendung eines bürstenlosen Zweiphasen-Gleichstrommotors anstelle eines dreiphasigen bürstenlosen Gleichstrommotors für den Stellantrieb. Derartige Zweiphasen-Gleichstrommotoren werden seit langer Zeit und in hohen Stückzahlen auf einem ganz anderen technischen Gebiet, nämlich zum Antrieb eines PC-Lüfters eingesetzt. Sie sind im Vergleich zum dreiphasigen Gleichstrommotor konstruktiv und schaltungstechnisch erheblich einfacher aufgebaut und daher kostengünstiger realisierbar.

Der Erfindung liegt auch die Erkenntnis zugrunde, dass solche Motoren trotz ihrer für den Lüfterbetrieb zwingend erforderlichen vorgegebenen einzigen Drehrichtung dennoch für einen Betrieb in beiden Drehrichtungen eingesetzt werden können.

Erfindungsgemäss ist demnach der Gleichstrommotor ein bürstenloser Zweiphasen-Gleichstrommotor. Dieser weist einen als Vierfach-T-Anker ausgebildeten Stator mit je einer Ankerspule sowie einen relativ zum Stator drehbar gelagerten Rotor mit vier sich in Umfangsrichtung abwechselnden Permanentmagnetpolen auf. Die Ankerspulen sind derart untereinander verschaltet, dass zwei benachbarte Ankerspulen bei Stromerregung niemals Magnetpole mit gleicher Polarität ausbilden.

Weiterhin gemäss der Erfindung weist die Motorsteuereinheit in besonders vorteilhafter Weise jeweils nur ein oder zwei elektrisch ansteuerbare Schaltmittel pro Phase als Stelleinrichtung für den Zweiphasen-Gleichstrommotor zur Aufbringung eines Drehmoments mit einer vorgebbaren Drehrichtung auf, d.h. in Summe nur zwei bzw. vier Schaltmittel.

Dagegen werden typischerweise für die dreiphasige elektronische Kommutierung nach dem Stand der Technik, wie z.B. in der eingangs genannten WO 2005/119898 A2 und der WO 2013/045186 A2, sechs Schaltelemente benötigt.

Nach einer Ausführungsform weist der Stellantrieb einen signal- oder datentechnisch mit der Motorsteuereinheit verbundenen Magnetfeldsensor zur Ermittlung der Drehstellung des Rotors auf Basis der magnetisch erfassten, in Umfangsrichtung abwechselnden Permanentmagnetpole auf. Es sind somit pro Umdrehung des Rotors vier Magnetpolwechsel erfassbar.

Nach einer vorteilhaften Ausführungsform ist der Magnetfeldsensor derart angeordnet, dass im stromlosen Zustand des Gleichstrommotors ein jeweiliges, von den Permanentmagneten erzeugtes Magnetfeld am Ort des Magnetfeldsensors maximal ist. Ein derartiger bürstenloser Zweiphasen-Gleichstrommotor weist im stromlosen Zustand, d.h. im nichtstromerregten Zustand, Rastmomente auf, in den dieser im lastfreien Zustand verharren würde. Der gemäss der Erfindung verwendete bürstenlose Zweiphasen-Gleichstrommotor ist somit ein rastmomentbehafteter Motor. In diesen vier möglichen Drehstellungen weist der Rotor gegenüber dem Stator jeweils sein energetisches Minimum auf. Anstelle des Magnetfeldsensors kann auch ein Reed-Relais verwendet werden, welches bei einer magnetischen Mindestfeldstärke den elektrischen Kontakt schliesst.

Ist ein zweiter Magnetfeldsensor in Umfangsrichtung des Rotors zum ersten Magnetfeldsensor, wie in der US-Patentanmeldung 2005/0001570 A1 beschrieben, angeordnet, wie z.B. in einem Winkel zwischen 5° und 40°, vorzugsweise um 22.5°, so ist eine eindeutige Drehrichtung des Rotors aus den beiden Sensorsignalen ermittelbar. Der Magnetfeldsensor kann wiederum ein (hysteresefreier) Hallsensor oder ein Reed-Relais sein. Ausgehend von jeder dieser Drehstellungen kann dann der Rotor durch geeignete Stromerregung gezielt in eine der beiden vorgegebenen Drehrichtungen angesteuert werden.

Besonders vorteilhaft ist es, wenn der Magnetfeldsensor ein digitaler Hallsensor mit Schalthysterese ist, der entsprechend der erfassten Polarität des Magnetfeldes, d.h. eines Nord- oder Südpols, und einer magnetischen Mindestfeldstärke seinen digitalen Zustand wechselt. Ein derartiger digitaler Hallsensor ist z.B. unter der Typbezeichnung US1881 von der Fa. Melexis erhältlich. Ja nach Typvariante schaltet ein derartiger Hallsensor bei Erreichen einer magnetischen Mindestfeldstärke und magnetischer Polarität in den High- oder Low-Zustand. Nach Wegnahme des zu erfassenden Magnetfelds bleibt dieser Zustand stabil. Erst bei Erreichen einer Mindestfeldstärke mit entgegengesetzter Polarität wechselt dann der Schaltzustand in den Low- bzw. High-Zustand. Dieser Hallsensor mit Schalthysterese ist im stromlosen Zustand des Motors im Bereich des Rotors dort anzuordnen, wo ein jeweiliges, von den Permanentmagneten erzeugtes Magnetfeld maximal ist.

Dadurch ist vorteilhaft mittels nur eines einzigen Magnetfeldsensors eine eindeutige Drehrichtung des Rotors ermittelbar. Der Rotor kann dann durch geeignete Stromerregung gezielt in eine der beiden vorgegebenen Drehrichtungen angesteuert werden, wie z.B. zum Starten einer Drehbewegung.

Alternativ können auch optische Mittel wie z.B. Reflexlichtschranken oder Gabellichtschranken, oder auch Drehgeber für eine Erfassung der Drehstellung des Rotors verwendet werden.

Einer weiteren Ausführungsform zufolge sind die Ankerspulen der T-Anker des Stators gemeinsam in Reihe geschaltet. Es bilden die beiden Enden der Reihenschaltung einen ersten und zweiten Brückenanschluss. Die Motorsteuereinheit weist als Stelleinrichtung eine H-Brücke aus vier Schaltmitteln zur Stromerregung auf, wobei die H-Brücke eingangsseitig mit einer ersten und zweiten Spannungsebene der Spannungsversorgungseinheit und ausgangsseitig mit den beiden Brückenanschlüssen verbunden ist. Die erste Spannungsebene kann das Massepotenzial als Bezugsebene sein. Die zweite Spannungsebene kann demgegenüber eine positive Versorgungsspannung sein. Der besondere Vorteil bei dieser Variante liegt in der besonders einfachen Bewicklung der vier Ankerspulen mit einem einzigen Draht, der nacheinander und unter Beachtung des Wicklungssinns alle vier Ankerspulen umwickelt.

Nach einer zur vorherigen Ausführungsform alternativen bevorzugten Ausführungsform sind die Ankerspulen zweier sich gegenüberliegender T-Anker des Stators jeweils in Reihe geschaltet oder es sind die Ankerspulen zweier benachbarter T-Anker in Reihe geschaltet. Die beiden verbleibenden Ankerspulen sind gleichfalls in Reihe geschaltet. Es bilden jeweils ein Ende der Reihenschaltungen einen gemeinsamen Motoranschluss und die beiden verbleibenden Enden der Reihenschaltungen einen ersten und zweiten Gegentaktanschluss. Die Motorsteuereinheit weist als Stelleinrichtung zwei im Gegentakt ansteuerbare Schaltmittel auf, wobei jeweils ein Schaltkontakt der beiden Schaltmittel mit einer ersten Spannungsebene der Spannungsversorgungseinheit verbunden ist. Es ist eine zweite Spannungsebene mit dem gemeinsamen Motoranschluss verbunden. Die beiden Gegentaktanschlüsse sind mit den verbleibenden Schaltkontakten der beiden Schaltmittel verbunden.

Der besondere Vorteil bei dieser Ausführungsform liegt im vergleichsweise geringen Bewicklungsaufwand des Stators und insbesondere in der Verwendung von nur zwei Schaltmitteln.

Weiterhin können die wenigen erforderlichen Bauteile wegen der besonders einfachen Ansteuerung des Zweiphasen-Gleichstrommotors auch direkt auf dem Schaltungsträger des Motors assembliert bzw. platziert werden. Dadurch kann der Zweiphasen-Gleichstrommotor sogar zum direkten Betrieb an einer Wechselspannung mit 230V oder 120V, oder an einer Gleichspannung mit 24V eingerichtet bzw. erweitert werden.

Dagegen werden beim eingangs genannten Stand der Technik gemäss der WO 2005/119898 A2 und der WO 2013/045186 A2 sechs Schaltmittel benötigt bei einem deutlich höheren Beschaltungs- und Bewicklungsaufwand des jeweiligen dortigen Stators bei einem zugleich deutlich höheren schaltungstechnischen Aufwand für die Ansteuerung der sechs Schaltmittel.

Ein weiterer grosser Vorteil liegt darin, dass keine Serienschaltung aus zwei Schaltmitteln für die elektronische Kommutierung mit den damit verbundenen doppelten ohmschen Verlusten erforderlich ist. Dadurch weist diese Ausführungsform im Vergleich zur vorherigen Ausführungsform und im Vergleich zu der eingangs beschriebenen 3-phasigen Ansteuerung eines bürstenlosen Gleichstrommotors einen höheren Wirkungsgrad auf.

Die Schaltmittel bei beiden vorherigen Ausführungsformen sind vorzugsweise Schalttransistoren, wie z.B. FET.

Gemäss einer Ausführungsform weist die vorherige Motorsteuereinheit eine Steuereinrichtung auf, von der die beiden Schaltmittel getaktet ansteuerbar sind. Die Motorsteuereinheit weist eine Stromerfassungseinrichtung zur Erfassung eines Motorstroms in den Motoranschluss und zum Bereitstellen eines jeweiligen Strommesswerts für die Steuereinrichtung auf. Weiterhin ist die Steuereinrichtung zur Durchführung eines SFOC-Verfahrens für die Ermittlung der Drehstellung des Rotors durch Auswerten der erfassten jeweiligen Strommesswerte eingerichtet. Mit "SFOC" (für Sensorless Field Oriented Control) ist eine sensorlose feldorientierte Regelung bezeichnet, welche die Drehstellung des Rotors aus einer Erfassung der magnetischen Flüsse ableitet, die proportional zu den erfassten Strömen sind. Dieses an sich bekannte Verfahren ist auch aus der zuvor genannten WO 2013/045186 A2 bekannt.

Alternativ oder zusätzlich kann die Motorsteuereinheit eine Steuereinrichtung aufweisen, von der die beiden Schaltmittel getaktet ansteuerbar sind. Die Motorsteuereinheit weist je eine Spannungsmesseinrichtung für eine jeweilige an den Gegentaktanschlüssen anliegende Gegentaktspannung und zum Bereitstellen jeweiliger Spannungsmesswerte für die Steuereinrichtung auf. Die Steuereinrichtung ist zur Durchführung eines SBLDC-Verfahrens für die Ermittlung der Drehstellung des Rotors durch Auswerten der erfassten jeweiligen Spannungsmesswerte eingerichtet. Bei dem "SBLDC" (für Sensorless Brushless Direct Current = sensorloser bürstenloser Gleichspannungsmotor) werden die Spannungen des Gleichstrommotors erfasst und ausgewertet. Da bei der Kommutierung zu jedem Zeitpunkt eine der beiden Motorphasen unbestromt ist, kann diese Phase zur Messung der induzierten Spannung verwendet werden. Anhand des Verlaufs der Gegentaktspannungen lässt sich der Zeitpunkt des Kommutierungswechsels abschätzen und daraus eine Drehstellung des Rotors ableiten. Dieses an sich bekannte Verfahren ist gleichfalls aus der eingangs genannten WO 2013/045186 A2 bekannt.

Die genannten Steuereinrichtungen sind vorzugsweise prozessorgestützte Mikrocontroller. Ein solcher Mikrocontroller kann ausserdem bereits Spannungsmesseingänge, wie z.B. Analog/Digital-Umsetzer, und/oder Strommesseingänge aufweisen.

Die Durchführung des SFOC- bzw. SBLDC-Verfahrens erfolgt vorzugsweise mittels eines Computerprogramms, welches das SFOC- bzw. das SBLDC-Verfahren in geeignete Programmschritte abbildet und welches dann auf einem solchen Mikrocontroller ausgeführt wird.

Nach einer Ausführungsform ist die Motorsteuereinheit dazu eingerichtet, den aktuell eingestellten Motorstrom auf einen ersten Haltestromwert zu reduzieren, wenn bei vorgegebener Drehrichtung - also rechts oder links - eine erste Solldrehstellung erreicht ist oder wenn keine Änderung der erfassten oder ermittelten Drehstellung des Rotors vorzugsweise nach Ablauf einer Wartezeit mehr detektierbar ist. Die Wartezeit liegt typischerweise im Bereich von 0,1 bis 1 Sekunde.

Dadurch ist vorteilhaft eine Reduktion des Leistungs- bzw. Strombedarfs für einen derartigen Stellantrieb möglich.

Nach einer zur vorhergehenden Ausführungsform alternativen Ausführungsform ist die Motorsteuereinheit dazu eingerichtet, den aktuell eingestellten Motorstrom schrittweise zu reduzieren, wenn bei vorgegebener Drehrichtung keine Änderung der erfassten oder ermittelten Drehstellung des Rotors mehr detektierbar ist. Mit anderen Worten steht der Rotor trotz des beaufschlagten Drehmoments still und läuft gegen einen mechanischen Endanschlag an. Die Motorsteuereinheit ist weiterhin dazu eingerichtet, den Motorstrom solange auf einen Absenkstromwert zu reduzieren, bis wieder eine Änderung der erfassten oder ermittelten Drehstellung des Rotors detektierbar ist, um dann den Motorstrom auf einen zweiten Haltestromwert als Summe des Absenkstromwertes zuzüglich eines Sicherheitsstromwertes einzustellen. In diesem Fall läuft der Rotor einen Schritt in die entgegengesetzte Drehrichtung zurück und wird dann in dieser Drehstellung gehalten.

Dadurch ist vorteilhaft eine zuverlässigere Reduktion des Leistungs- bzw. Strombedarfs für einen derartigen Stellantrieb möglich. Darüber hinaus können thermisch bedingte Änderungen des für den Stellantrieb erforderlichen Mindesthaltestroms berücksichtigt werden.

Nach einer zu den beiden vorhergehenden Ausführungsformen alternativen Ausführungsform ist die Motorsteuereinheit dazu eingerichtet, den aktuell eingestellten Motorstrom schrittweise zu reduzieren, wenn bei vorgegebener Drehrichtung keine Änderung der erfassten oder ermittelten Drehstellung des Rotors mehr detektierbar ist. Sie ist zudem dazu eingerichtet, dann den Motorstrom solange auf einen Absenkstromwert zu reduzieren, bis wieder eine Änderung der erfassten oder ermittelten Drehstellung des Rotors detektierbar ist. In diesem Fall läuft der Rotor einen Schritt in die entgegengesetzte Drehrichtung zurück. Schliesslich ist die Motorsteuereinheit dazu eingerichtet, dann den Motorstrom wieder solange zu erhöhen, bis wieder eine Änderung der Drehstellung des Rotors detektierbar ist, um dann den Motorstrom auf einen zweiten Haltestromwert als Summe des Absenkstromwertes zuzüglich eines Sicherheitsstromwertes einzustellen.

Im Vergleich zur vorherigen Ausführungsform wird der Rotor und somit der Stellantrieb wieder exakt in die erste Drehstellung gegen den Endanschlag zurückgestellt und dann dort gehalten. Wie zuvor ist auch hier eine zuverlässigere Reduktion des Leistungs- bzw. Strombedarfs für einen derartigen Stellantrieb möglich. Thermisch bedingte Änderungen beim erforderlichen Mindesthaltestrom können hier gleichfalls berücksichtigt werden.

Nach einer bevorzugten Ausführungsform weist die Motorsteuereinheit eine Steuereinrichtung auf, von der die Schaltmittel getaktet ansteuerbar sind. Die Steuereinrichtung ist dazu eingerichtet, den durch die Ankerspulen fliessenden Motorstrom durch eine überlagerte pulsweitenmodulierte Ansteuerung der Schaltmittel auf einen vorgegebenen Stromsollwert einzustellen. Dadurch wird der Leistungs- bzw. Strombedarf nochmals reduziert.

Alternativ dazu kann die Spannungsversorgungseinheit eine regelbare getaktete Spannungsversorgungseinheit sein. Sie kann einen Steuereingang aufweisen, wie z.B. einen Spannungseingang oder eine SPI-Datenschnittstelle, um auf einen von der Steuereinrichtung der Motorsteuereinheit vorgegebenen Spannungswert zu regeln und diese ausgangsseitig an der zweiten Spannungsebene bereitzustellen. In diesem Fall ist keine überlagerte pulsweitenmodulierte Ansteuerung der für die Kommutierung vorgesehenen Schaltmittel erforderlich. Dadurch reduzieren sich die hochfrequenten Wechselstromverluste in den Ankerspulen des Gleichstrommotors. Die Spannungsversorgungseinheit kann zudem ein ausgangsseitiges HF-Filter aufweisen.

Gemäss einer weiteren Ausführungsform weist die Spannungsversorgungseinheit einen eingangsseitigen Anschluss zum Anschliessen an ein Stromversorgungsnetz. Alternativ oder zusätzlich weist sie einen elektrischen Energiespeicher auf. Dadurch ist ein unterbrechungsfreier Betrieb des Stellantriebs möglich.

Der Vorteil der vorliegenden Erfindung liegt in der Verwendung eines bürstenlosen Zweiphasen-Gleichstrommotors mit Drehrichtungserfassung zum Antreiben eines nachgeschalteten Reduziergetriebes für einen Stellantrieb einer Klappe oder eines Ventils zum Einstellen eines gasförmigen oder flüssigen Volumenstroms, insbesondere zum Heizen, Lüften und Klimatisieren eines Gebäudes. Derartige Gleichstrommotoren werden üblicherweise bei PC-Lüftern eingesetzt, weisen einen besonders einfachen Aufbau auf und sind wegen der hohen Stückzahlen im PC-Markt sehr kostengünstig.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein Beispiel für einen Stellantrieb mit Motorsteuereinheit, Gleichstrommotor und mit nachgeschaltetem Reduziergetriebe zum Antrieb einer Klappe,
- FIG 2: eine Darstellung eines beispielhaften bürstenlosen Zweiphasen-Gleichstrommotors zur Verwendung als Antrieb in einem Stellantrieb gemäss der Erfindung,
- FIG 3 - FIG 5: den schematischen Aufbau einer Motorsteuereinheit mit daran angeschlossenem Zweiphasen-Gleichstrommotor nach einer ersten, zweiten und dritten Ausführungsform jeweils mit einem Magnetfeldsensor für die Drehstellungserfassung des Gleichstrommotors,
- FIG 6, FIG 7: den schematischen Aufbau einer Motorsteuereinheit mit sensorloser Drehstellungsermittlung des angeschlossenen Zweiphasen-Gleichstrommotors auf Basis eines SFOC-Verfahrens und eines SBLDC-Verfahrens nach einer vierten und fünften Ausführungsform,
- FIG 8: je eine Kommutierungsfolge zur Ansteuerung des Gleichstrommotors gemäss FIG 3 nach rechts oder links unter Auswertung eines Sensorsignals von einem digitalen Hallsensor mit Schalthysterese, und
- FIG 9: ein Beispiel für die mögliche Einstellung der Höhe des Motorstroms bzw. der Gegentaktanschlussströme gemäss FIG 3 und FIG 4 mittels überlagerter pulsweitenmodulierter Ansteuerung.

FIG 1 zeigt ein Beispiel für einen Stellantrieb 1, der eine Motorsteuereinheit 10 mit angeschlossenem Gleichstrommotor 3, ein nachgeschaltetes Reduziergetriebe 4 und einen Abtrieb 5 für eine Klappe 2 zum Einstellen eines gasförmigen Volumenstroms aufweist, wie z.B. zum Einstellen eines Luftstroms zum Heizen, Lüften oder Klimatisieren eines Gebäudes. Alternativ kann am Abtrieb 5 des Reduziergetriebes 4 ein Ventil zum Einstellen eines flüssigen Volumenstroms angeschlossen sein, wie z.B. zum Einstellen eines Wasservolumenstroms.

FIG 2 zeigt eine detailliertere Darstellung eines beispielhaften bürstenlosen Zweiphasen-Gleichstrommotors 3 für die vorteilhafte Verwendung als Antrieb in einem Stellantrieb 1 gemäss der Erfindung. Der gezeigte Zweiphasen-Gleichstrommotor 3 weist einen als Vierfach-T-Anker mit vier T-Ankern T1-T4 ausgebildeten Stator 6 und einen relativ zum Stator 6 drehbar gelagerten, topfförmig ausgestalteten Rotor 7 auf. Der Stator 6 ist fest auf einem Träger 9, vorzugsweise auf einem Schaltungsträger, angeordnet. Der Rotor 7 umfasst bzw. bildet vier sich in Umfangsrichtung abwechselnde Permanentmagnetpole N, S aus. Mit dem Bezugszeichen A ist die Drehachse und mit W eine fest mit dem Rotor 7 verbundene Welle bezeichnet. Die Welle W ist im Beispiel der vorliegenden Figur im Stator 6 gelagert und durch eine Öffnung im Schaltungsträgers 9 hindurchgeführt. Das herausragende Wellenende ist zum Anschluss an ein Reduziergetriebe vorgesehen. Typischerweise ist auf diesem Wellenende ein getriebeeingangsseitiges und drehfest mit dem Wellenende verbundenes Zahnrad angebracht.

Letzteres ist aus Gründen der Übersichtlichkeit selbst nicht dargestellt. Alternativ kann die Welle W durch die Stirnseite 12 des Rotors 7 zum Anschluss des Reduziergetriebes hindurchgeführt sein.

Im Zwischenraum zwischen der Oberseite des gezeigten Schaltungsträgers 9 und der Unterseite des Rotors 7 ist weiterhin ein Magnetfeldsensor 8 angeordnet (siehe FIG 3). Der Magnetfeldsensor 8 ist zur magnetischen Erfassung der Drehbewegung des Rotors 7 auf Basis der magnetisch erfassten, in Umfangsrichtung abwechselnden Permanentmagnetpole N, S vorgesehen. Auf Basis der erfassten wechselnden Magnetfelder ist dann die Drehstellung des Rotors 7 ermittelbar.

FIG 3 zeigt den schematischen Aufbau einer Motorsteuereinheit 10 mit daran angeschlossenem bürstenlosem Zweiphasen-Gleichstrommotor 3 nach einer ersten Ausführungsform.

Im rechten Teil der FIG 3 ist nun der in FIG 2 dargestellte Motor 3 in einer Draufsicht entlang der in FIG 2 eingetragenen Schnittlinie III-III durch die Stirnseite 12 bzw. durch den Topfboden des topfförmig ausgebildeten Rotors 7 zu sehen. Es ist nun der als Vierfach-T-Anker ausgebildete Stator 6 mit seinen vier T-Ankern T1-T4 im Detail erkennbar, auf welchem jeweils eine Ankerspule C1-C4 aufgenommen bzw. aufgewickelt ist. Der Vierfach-T-Anker 6 kann aus einem einstückigen magnetischen Werkstoff, wie z.B. aus Eisen oder Nickel, hergestellt sein. Er kann alternativ ein axial geschichtetes Blechpaket aus vielen gleichen Blechen sein. Mit "axial" sind hier Richtungen entlang der Drehachse A bezeichnet. Die Ankerspulen C1-C4 sind gemäss der Erfindung derart untereinander verschaltet, dass zwei benachbarte Ankerspulen C1-C4 bei Stromerregung niemals Magnetpole mit gleicher Polarität ausbilden.

Desweiteren sind die vier sich in Umfangsrichtung, d.h. in Richtung um die Drehachse A herum, abwechselnden Permanentmagnetpole N, S zu sehen. Diese bilden sich hauptsächlich an der radialen Innenseite des topfförmig ausgeführten Rotors 7 sowie auch an der dem Schaltungsträger 9 gemäss FIG 2 gegenüberliegenden Unterseite des Rotors 7 aus. Mit "radial" sind hier Richtungen hin und weg zur Drehachse A bezeichnet. Zur Erfassung der Drehbewegung des Rotors 7 ist nun der Magnetfeldsensor 8 derart angeordnet, dass im hier gezeigten stromlosen Zustand des rastmomentbehafteten Gleichstrommotors 3 ein jeweiliges, von den Permanentmagneten des Rotors 7 erzeugtes Magnetfeld am Ort des Magnetfeldsensors 8 maximal ist. Im vorliegenden Fall liegt genau einer der beiden Permanentnordpole N des Rotors 7 mit dort maximaler magnetischer Induktion über dem Magnetfeldsensor 8. Der Magnetfeldsensor 8 ist im vorliegenden Beispiel ein digitaler Hallsensor mit Schalthysterese, der entsprechend der erfassten Polarität des Magnetfeldes, d.h. eines Nord- oder Südpols, und einer magnetischen Mindestfeldstärke seinen digitalen Zustand wechselt. Dadurch ist vorteilhaft mittels nur eines einzigen solchen Magnetfeldsensors 8 eine eindeutige Drehrichtung des Rotors ermittelbar. Mit HS ist das ausgangsseitige digitale Sensorsignal des digitalen Hallsensors 8 mit Schalthysterese bezeichnet. Dieses ist dann durch die Motorsteuereinheit 10 einlesbar. Die beiden anderen elektrischen Verbindungen dienen zur Stromversorgung des Hallsensors 8.

Bei der vorliegenden Ausführungsform sind die Ankerspulen C1, C3; C2, C4 zweier sich gegenüberliegender T-Anker T1, T3; T2, T4 des Stators 6 jeweils in Reihe geschaltet. Dies erfolgt hier mittels eines Drahts D. Vorzugsweise wird nach dem Ende der Bewicklung eines der T-Anker mit einem Spulendraht dann auch der gegenüberliegende T-Anker weiterbewickelt. Die Ankerspulen C1, C3; C2, C4 sind entsprechend ihrem Wicklungssinn so bewickelt, dass sie alle bei Stromerregung Magnetpole mit gleichem Vorzeichen, d.h. Nordpole oder Südpole, an der radialen Aussenseite der beiden T-Anker T1, T3; T2, T4 ausbilden. Es bilden dann jeweils ein Ende der Reihenschaltungen einen gemeinsamen Motoranschluss G. Die beiden verbleibenden Enden der Reihenschaltungen bilden einen ersten und zweiten Gegentaktanschluss U, V. Die drei Anschlüsse G, U, V können z.B. zu einem gemeinsamen Stecker geführt sein, der dann auf ein entsprechendes Gegenstück auf dem Schaltungsträger 9 aufgesteckt werden kann. Sie können auch direkt auf entsprechende Kontaktstellen auf dem Schaltungsträger 9 aufgelötet sein.

Im linken Teil der FIG 3 ist die Motorsteuereinheit 10 nun im Detail zu sehen. Sie weist eine Spannungsversorgungseinheit 20, eine typischerweise als Mikrocontroller ausgeführte Steuereinrichtung 11 und zwei im Betrieb im Gegentakt ansteuerbare Schaltmittel S1, S2 als Stelleinrichtung für den Gleichstrommotor 3 auf. Typischerweise handelt es sich hier bei den Schalttransistoren S1, S2 um Schalttransistoren. Es ist jeweils ein Schaltkontakt der beiden Schaltmittel S1, S2 mit einer ersten Spannungsebene GND der Spannungsversorgungseinheit 20 verbunden. Eine zweite Spannungsebene VCC der Spannungsversorgungseinheit 20 ist mit dem gemeinsamen Motoranschluss G verbunden. Schliesslich sind beiden Gegentaktanschlüsse U, V mit den verbleibenden Schaltkontakten der beiden Schaltmittel S1, S2 verbunden. Mit iM ist der von der Spannungsversorgungseinheit 20 gespeiste und in den gemeinsamen Motoranschluss G hineinfliessende Motorstrom bezeichnet, der dann wechselweise über die beiden Schaltmittel S1, S2 in die erste Spannungsebene GND zurückfliesst. Mit iU und iV sind die beiden Gegentaktströme bezeichnet.

Mit SW ist ein Sollwert für die Steuereinrichtung 11 bzw. für den Stellantrieb 1 bezeichnet. Dieser ist z.B. extern über eine Zuleitung des Stellantriebs 1 oder über Funkt durch eine übergeordnete Zentrale oder Steuerung vorgebbar. Er ist alternativ oder zusätzlich mittels eines manuellen Schalters am Stellantrieb 1 vorgebbar. Im einfachsten Fall ist der Sollwert SW ein Ein-/Ausbefehl zum Öffnen oder zum Schliessen einer Klappe 2 oder eines Ventils, welche beziehungsweise welches am Stellantrieb 1 angeschlossen ist. Der Sollwert SW kann auch ein digitaler oder analoger Wert sein, der einen Stellgrad der Klappe 2 oder des Ventils repräsentiert, wie z.B. einen Wert zwischen 0% und 100%, wobei 0% den geschlossenen Zustand, 100% den offenen Zustand und Prozentwerte dazwischen einen zum Teil geöffneten oder zum Teil geschlossenen Zustand der Klappe 2 oder des Ventils repräsentieren. Zur Erfassung des Sollwerts SW kann die Steuereinrichtung 11 einen elektrischen Steuereingang aufweisen. Im einfachsten Fall ist der Steuereingang ein digitaler Signaleingang. Der Steuereingang kann auch als Datenschnittstelle ausgebildet sein, wie z.B. als SPI-Schnittstelle (für Serial Port Interface).

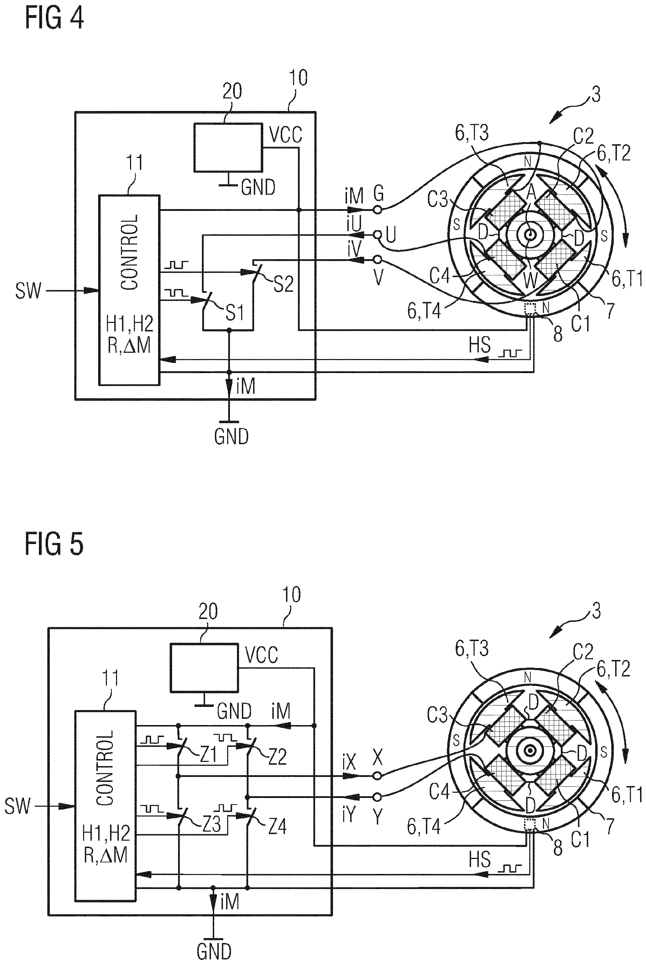

FIG 4 zeigt den schematischen Aufbau einer Motorsteuereinheit 10 mit angeschlossenem bürstenlosem Zweiphasen-Gleichstrommotor 3 nach einer zweiten Ausführungsform. Diese Ausführungsform unterscheidet sich von der vorhergehenden Ausführungsform lediglich dadurch, dass die Ankerspulen C1, C2; C3, C4 zweier benachbarter T-Anker T1, T2; T3, T4 nun in Reihe geschaltet sind. Die Ankerspulen C1, C2; C3, C4 sind entsprechend ihrem Wicklungssinn so bewickelt, dass sie bei Stromerregung Magnetpole mit unterschiedlichem Vorzeichen, d.h. einen Nord- und Südpol oder einen Süd- und Nordpol, an der radialen Aussenseite der beiden T-Anker T1, T2; T3, T4 ausbilden. Die elektrische Kommutierung bleibt unverändert.

FIG 5 zeigt den schematischen Aufbau einer Motorsteuereinheit 10 mit angeschlossenem bürstenlosem Zweiphasen-Gleichstrommotor 3 nach einer dritten Ausführungsform. In diesem Fall sind die Ankerspulen C1-C4 der T-Anker T1-T4 des Stators 6 in Reihe geschaltet. Sie bilden somit eine offene Reihenschaltung. Die beiden Enden der Reihenschaltung bilden einen ersten und zweiten Brückenanschluss X, Y. Im vorliegenden Beispiel liegen die beiden Enden der Reihenschaltung an den beiden Ankerspulen C3 und C4. Die Ankerspulen C1-C4 sind dabei entsprechend ihrem Wicklungssinn so bewickelt, dass sich in Umfangsrichtung des Stators 6 bei Stromerregung abwechselnde Magnetpole an der radialen Aussenseite der T-Anker T1-T4 ausbilden. Bei Umkehrung der Stromrichtung der Stromerregung kehren sich auch die Vorzeichen der Magnetpole um.

Die Motorsteuereinheit 10 weist als Stelleinrichtung eine H-Brücke aus vier Schaltmitteln Z1-Z4 zur Stromerregung auf.

Eine derartige H-förmige Brücke wird auch als Vollbrücke bezeichnet. Die H-Brücke ist eingangsseitig mit einer ersten und zweiten Spannungsebene GND, VCC der Spannungsversorgungseinheit 20 und ausgangsseitig mit den beiden Brückenanschlüssen X, Y verbunden. Mit iX und iY sind die zugehörigen Brückenanschlussströme bezeichnet. Die elektronische Kommutierung erfolgt in der Weise, dass im Betrieb niemals zwei in Reihe geschaltete Schaltmittel Z1, Z3; Z2, Z4 gleichzeitig schliessen. Um ein Antriebsdrehmoment auf den Gleichstrommotor 3 aufzubringen, werden die beiden Schaltmittel Z1, Z4 und die beiden Schaltmittel Z2, Z3 gleichzeitig (getaktet) angesteuert. Für einen möglichen Bremsbetrieb, um ein Bremsdrehmoment auf den Gleichstrommotor 3 aufzubringen, können die beiden Schaltmittel Z1, Z2 oder die beiden Schaltmittel Z3, Z4 gleichzeitig (getaktet) angesteuert werden.

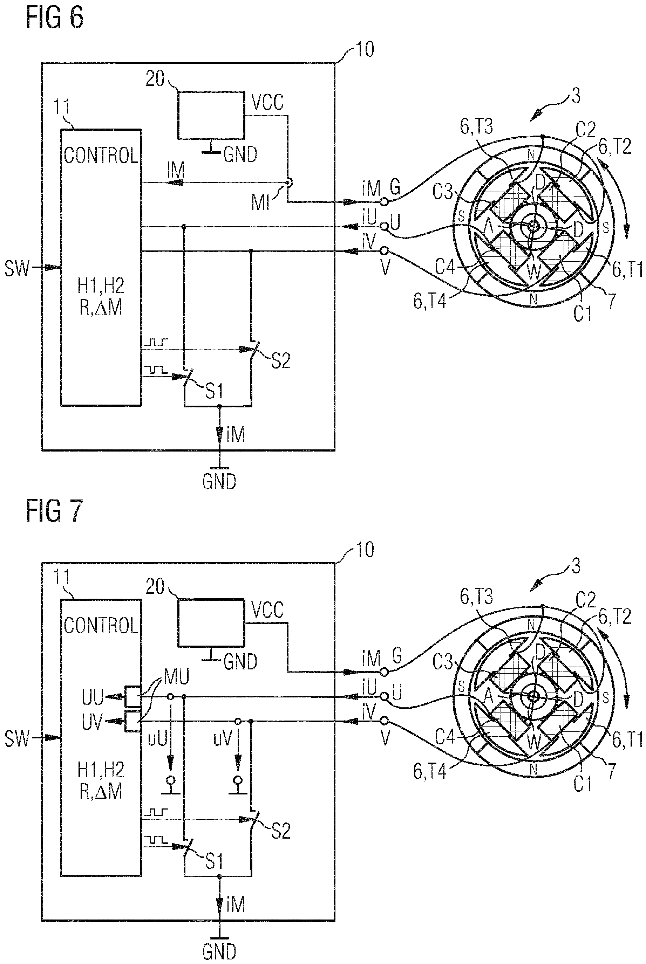

FIG 6 zeigt den schematischen Aufbau einer Motorsteuereinheit 10 mit Drehstellungsermittlung des angeschlossenen Zweiphasen-Gleichstrommotors 3 auf Basis eines SFOC-Verfahrens nach einer vierten Ausführungsform. Die Bewicklung und Verdrahtung des Gleichstrommotors 3 entspricht der gemäss FIG 3.

Zur Drehstellungserfassung weist die Motorsteuereinheit 10 nun eine Stromerfassungseinrichtung MI für einen Motorstrom iM auf. Im Falle eines jeweiligen geschlossenen Schaltmittels S1, S2 entspricht der Motorstrom iM den beiden Gegentaktanschlussströmen iU und iV. Die Stromerfassungseinheit MI stellt einen jeweiligen Strommesswert IM für die Steuereinrichtung 11 zur Verfügung. Die Stromerfassungseinheit MI kann z.B. ein Stromwandler sein. Vorzugsweise ist dieser ein Messwiderstand, über dem eine zum Motorstrom iM proportionale Messspannung abfällt, die z.B. durch einen A/D-Umsetzer der Steuereinrichtung 11 in einen Digitalwert zur weiteren Verarbeitung umgesetzt werden kann. Die Steuereinrichtung 11 ist dazu eingerichtet, die Ermittlung der Drehstellung des Rotors 7 nun durch Auswerten der erfassten jeweiligen Strommesswerte IM mittels eines SFOC-Verfahrens durchzuführen. Die Drehstellung des Rotors 7 ist dabei aus der Erfassung der magnetischen Flüsse im Stator 6 ableitbar, die ihrerseits proportional zum erfassten Motorstrom iM sind.

FIG 7 zeigt den schematischen Aufbau einer Motorsteuereinheit 10 mit Drehstellungsermittlung des angeschlossenen Zweiphasen-Gleichstrommotors 3 auf Basis eines SBLDC-Verfahrens nach einer fünften Ausführungsform. Die Bewicklung und Verdrahtung des Gleichstrommotors 3 entspricht der gemäss FIG 3.

Bei dieser Ausführungsform weist die Motorsteuereinheit 10 zwei Spannungsmesseinrichtungen MU für die beiden an den Gegentaktanschlüssen U, V anliegenden Gegentaktspannungen uU, uV auf. Die beiden Spannungsmesseinrichtungen MU stellen dann die jeweiligen Spannungsmesswerte UU, UV für die Steuereinrichtung 11 zur Verfügung. Im einfachsten Fall sind die beiden Spannungsmesseinrichtung MU als Eingangskanäle eines A/D-Umsetzers realisiert. Die Steuereinrichtung 11 ist dabei zur Durchführung eines SBLDC-Verfahrens für die Ermittlung der Drehstellung des Rotors 7 durch Auswerten der erfassten jeweiligen Spannungsmesswerte UU, UV eingerichtet.

Beide vorherigen Ausführungsformen gemäss FIG 6 und FIG 7 sind auch miteinander kombinierbar.

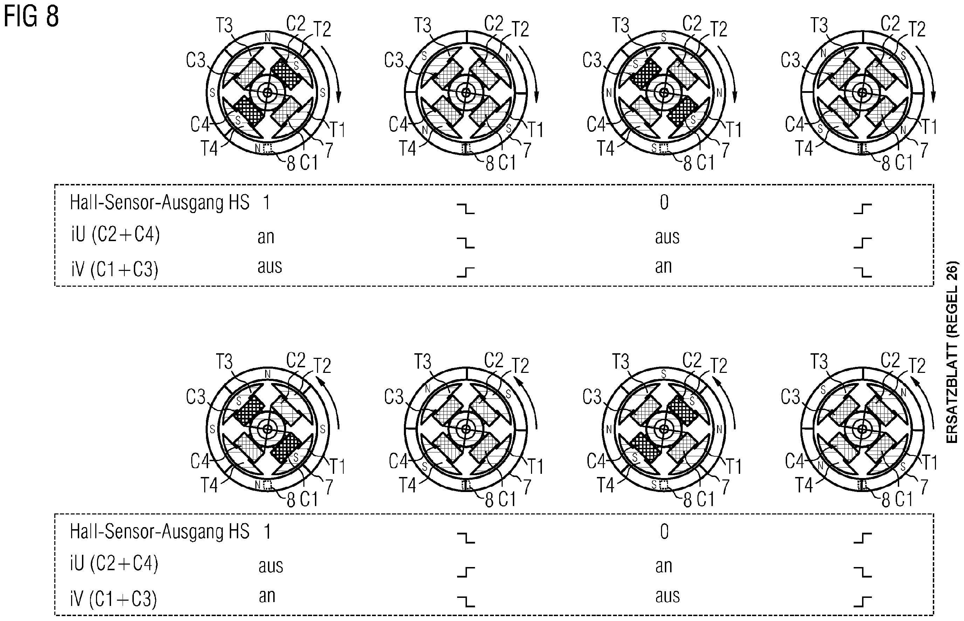

FIG 8 zeigt je eine Kommutierungsfolge zur Ansteuerung des Gleichstrommotors gemäss FIG 3 nach rechts oder links unter Auswertung eines Sensorsignals HS von einem digitalen Hallsensor 8 mit Schalthysterese.

Im oberen Teil der FIG 8 erfolgt die elektronische Kommutierung mittels der Schaltmittel S1, S2 so, dass der Rotor 7 im Uhrzeigersinn bewegt wird. Unter den oberen vier Drehstellungen des Rotors 7 ist der binäre Wert ("1", "0") des Sensorsignals HS des digitalen Hallsensors 8 mit Schalthysterese aufgetragen. Darunter ist der stromerregte Zustand "on" bzw. der stromloses Zustand "off" der jeweils beiden in Reihe geschalteten Ankerspulen C2, C4 und C1, C3 aufgetragen. Wie die Abfolge im oberen Teil der FIG 8 zeigt, werden die Nordpole N der Permanentmagnetpole des Rotors 7 in der ersten und dritten Drehstellung durch die zeitweise Stromerregung der Ankerspulen C2, C4 und dann durch die zeitweise Stromerregung der Ankerspulen C1, C3 im Uhrzeigersinn zu den korrespondierenden Südpolen S an der radialen Aussenseite der T-Anker T2, T4 bzw. T1, T3 hingezogen. Nach dem Ablauf der vier Drehstellungen wiederholt sich der Ablauf von vorne.

Im unteren Teil der FIG 8 erfolgt die elektronische Kommutierung mittels der Schaltmittel S1, S2 so, dass der Rotor 7 im Gegenuhrzeigersinn bewegt wird. Unterhalb der unteren vier Drehstellungen des Rotors 7 ist wiederum der binäre Wert des Sensorsignals HS des digitalen Hallsensors 8 mit Schalthysterese aufgetragen. Darunter ist wieder der stromerregte Zustand "on" bzw. der stromloses Zustand "off" der jeweils beiden in Reihe geschalteten Ankerspulen C2, C4 und C1, C3 aufgetragen. Wie die Abfolge im unteren Teil der FIG 8 nun zeigt, werden die Nordpole N der Permanentmagnetpole des Rotors 7 in der ersten und dritten Drehstellung durch die zeitweise Stromerregung der Ankerspulen C1, C3 und dann durch die zeitweise Stromerregung der Ankerspulen C2, C4 im Gegenuhrzeigersinn zu den korrespondierenden Südpolen S an der radialen Aussenseite der T-Anker T1, T3 bzw. T2, T4 hingezogen. Nach dem Ablauf der vier Drehstellungen wiederholt sich der Ablauf von vorne.

Für alle drei Ausführungsformen gemäss den Figuren FIG 3 bis FIG 5 ist der Rotor 7 des bürstenlosen Zweiphasen-Gleichstrommotors 3 mit einer Federeinrichtung verbunden. Mittels der Federeinrichtung wird der Rotor 7 in dem Fall, dass er aus einer Ruhelage ausgelenkt ist, mit einer rücktreibenden Kraft beaufschlagt. Dadurch kann der Stellantrieb 1 bei Ausfall der Stromversorgung selbsttätig in einen stromlosen Ruhezustand zurückfahren, um z.B. die dann angeschlossene Klappe 2 oder ein Ventil sicher zu schliessen.

Gleichfalls für alle drei zuvor genannten Ausführungsformen kann die Motorsteuereinheit 10 dazu eingerichtet sein, den aktuell eingestellten Motorstrom iM auf einen ersten Haltestromwert H1 zu reduzieren, wenn bei vorgegebener Drehrichtung - also rechts oder links - eine Solldrehstellung erreicht ist oder wenn keine Änderung der erfassten oder ermittelten Drehstellung des Rotors 7 mehr detektierbar ist.

Die Solldrehstellung kann z.B. ein Zahlenwert für die Anzahl von Umdrehungen des Gleichstrommotors 3 in die eine oder andere Drehrichtung sein oder die Anzahl von Impulsen vom digitalen Hallsensor 8. Die Anzahl von Umdrehungen oder Impulsen kann einem vorgegebenen Sollwert SW für den Stellgrad des Stellantriebs 1 entsprechen. Ist dann diese Solldrehstellung erreicht, so verharrt der Stellantrieb 1 in dieser Position. Der erste Haltestromwert H1 kann als digitaler Wert in der Steuereinrichtung 11 abgespeichert sein.

Alternativ kann der aktuell eingestellte Motorstrom iM auf den ersten Haltestromwert H1 durch die Motorsteuereinheit 10 reduziert werden, wenn bei vorgegebener Drehrichtung keine Änderung der erfassten oder ermittelten Drehstellung des Rotors 7 mehr detektierbar ist. In diesem Fall hat der Stellantrieb 1 einen mechanischen Endanschlag erreicht, gegen den der Stellantrieb 1 anfährt.

Gleichfalls für alle drei zuvor genannten Ausführungsformen gemäss FIG 3 bis FIG 5 kann die Motorsteuereinheit 10 dazu eingerichtet sein, den aktuell eingestellten Motorstrom iM schrittweise zu reduzieren, falls bei vorgegebener Drehrichtung keine Änderung der erfassten oder ermittelten Drehstellung des Rotors 7 mehr detektierbar ist. Auch in diesem Fall hat der Stellantrieb 1 einen mechanischen Endanschlag erreicht. Die Motorsteuereinheit 10 ist dann dazu eingerichtet, den Motorstrom iM solange auf einen Absenkstromwert R zu reduzieren, bis wieder eine Änderung der Drehstellung des Rotors 7 detektierbar ist, um dann den Motorstrom iM auf einen zweiten Haltestromwert H2 als Summe des Absenkstromwertes R zuzüglich eines Sicherheitsstromwertes ΔM einzustellen. Der Sicherheitsstromwert ΔM liegt typischerweise in einem Bereich von 5% bis 10% des Absenkstromwertes R. Er kann als digitaler Wert in der Steuereinrichtung 11 gespeichert sein, ebenso wie der ermittelte Absenkstromwert R und der zweite Haltestromwert H2.

Gleichfalls für alle drei zuvor genannten Ausführungsformen kann die Motorsteuereinheit 10 dazu eingerichtet sein, den aktuell eingestellten Motorstrom iM schrittweise zu reduzieren, wenn bei vorgegebener Drehrichtung keine Änderung der erfassten oder ermittelten Drehstellung des Rotors 7 mehr detektierbar ist. Auch in diesem Fall hat der Stellantrieb 1 einen mechanischen Endanschlag erreicht. Die Motorsteuereinheit 10 ist dazu eingerichtet, den Motorstrom iM dann solange (wieder) zu erhöhen, bis wieder eine Änderung der Drehstellung des Rotors 7 detektierbar ist, um dann den Motorstrom iM auf einen zweiten Haltestromwert H2 als Summe des Absenkstromwertes R zuzüglich eines Sicherheitsstromwertes ΔM einzustellen.

FIG 9 zeigt ein Beispiel für die mögliche Einstellung der Höhe des Motorstrom iM bzw. der Gegentaktanschlussströme iU, iV gemäss FIG 3 und FIG 4 mittels überlagerter pulsweitenmodulierter Ansteuerung durch die Schaltmittel S1, S2. Der Takt der elektronischen Kommutierung ist durch das Sensorsignal HS des digitalen Hallsensors 8 mit Schalthysterese vorgegeben. Durch das Sensorsignal HS werden wechselweise die Ankerspulen C2, C4 und die Ankerspulen C1, C3 mit dem Gegentaktanschlussstrom iU bzw. iV, der jeweils auch dem Motorstrom iM entspricht, stromerregt. Die Einstellung der Stromhöhe erfolgt durch eine überlagerte höherfrequente Pulsweitenmodulation. Im vorliegenden Beispiel ist die Taktfrequenz der Pulsweitenmodulation etwa 20-mal so hoch wie die Frequenz des Sensorsignals HS des Hallsensors 8, dies für eine aktuell vorliegende Umdrehungsgeschwindigkeit des Rotors 7. Das Pulsweitenverhältnis liegt im vorliegenden Beispiel bei etwa 2:1. Der eingestellte Gegentaktanschlussstrom iU, UV weist somit einen Stromwert auf, der ca. 2/3 des maximal möglichen Stromwertes beträgt, unter der Annahme eines in etwa ohmschen Verhaltens der Ankerspulen C1-C4.

### Bezugszeichenliste

- 1: Stellantrieb
- 2: Klappe
- 3: Motor, Gleichstrommotor
- 4: Reduziergetriebe
- 5: Abtrieb
- 6: Stator
- 7: Rotor
- 8: Magnetfeldsensor
- 9: Schaltungsträger, Leiterplatte
- 10: Motorsteuereinheit
- 11: Steuereinrichtung, Mikrocontroller
- 12: Stirnseite des Rotors
- 20: Spannungsversorgungseinheit, Stromversorgung

- A: Drehachse
- C1-C4: Ankerspulen
- D: Drahtverbindung
- G: gemeinsamer Motoranschluss
- GND: erste Spannungsebene, Bezugsspannungsebene, Masse
- HS: Hallsensorsignal, Sensorsignal
- H1, H2: Haltestromwert
- iM: Motorstrom
- IM: Strommesswertes
- iU: Gegentaktanschlussstrom U
- iV: Gegentaktanschlussstrom V
- iX: Brückenanschlussstrom X
- iY: Brückenanschlussstrom Y
- ΔM: Sicherheitsstromwert
- MI: Stromerfassungseinrichtung
- MU: Spannungsmesseinrichtung
- N, S: Permanentmagnetpole
- N: Nordpol
- R: Absenkstromwert
- S: Südpol
- S1, S2; Z1-Z4: Schaltmittel, Schalttransistor, FET
- SW: Sollwert, Ein-/Aus-Befehl
- t: Zeit
- T1-T4: T-Anker
- U, V: Gegentaktanschlüsse
- uU, uV: Gegentaktspannung
- UU, UV: Spannungsmesswerte
- VCC: zweite Spannungsebene
- W: Welle
- X, Y: Brückenanschlüsse

## Patentansprüche

1. Stellantrieb für eine Klappe (2) oder für ein Ventil zum Einstellen eines gasförmigen oder flüssigen Volumenstroms, insbesondere zum Heizen, Lüften oder Klimatisieren eines Gebäudes, mit einem Gleichstrommotor (3), mit einem nachgeschalteten Reduziergetriebe (4) sowie mit einem getriebeseitigen Abtrieb (5) für die Klappe (2) oder für das Ventil, wobei der Stellantrieb eine Motorsteuereinheit (10) zur Ansteuerung des Gleichstrommotors (3) sowie eine Spannungsversorgungseinheit (20) aufweist, wobei der Gleichstrommotor (3) ein bürstenloser Zweiphasen-Gleichstrommotor ist, welcher einen als Vierfach-T-Anker ausgebildeten Stator (6) mit je einer Ankerspule (C1-C4) und einen relativ zum Stator (6) drehbar gelagerten, radial aussenliegenden Rotor (7) mit genau vier in Umfangsrichtung angeordneten und sich abwechselnden Permanentmagnetpolen (N, S) aufweist, wobei der Rotor (7) des Gleichstrommotors (3) mit einer Federeinrichtung verbunden ist, mittels derer der Rotor (7) in dem Fall, dass er aus einer Ruhelage ausgelenkt ist, mit einer rücktreibenden Kraft beaufschlagt ist, wobei die Motorsteuereinheit (10) elektrisch ansteuerbare Schaltmittel (S1, S2; Z1-Z4) als Stelleinrichtung für den Gleichstrommotor (3) zur Aufbringung eines Drehmoments mit einer vorgebbaren Drehrichtung aufweist, wobei die Motorsteuereinheit (10) eingerichtet ist, die Ankerspulen (C1-C4) entsprechend der vorgegebenen Drehrichtung sowie in Abhängigkeit einer Drehstellung des Rotors (7) über die Schaltmittel (S1,S2; Z1-Z4) an die Spannungsversorgungseinheit (20) zu schalten, wobei die Ankerspulen (C1-C4) derart untereinander verschaltet sind, dass zwei benachbarte Ankerspulen (C1-C4) bei Stromerregung niemals Magnetpole mit gleicher Polarität ausbilden,
- wobei die Ankerspulen (C1-C4) der T-Anker (T1-T4) gemeinsam in Reihe geschaltet sind, wobei die beiden Enden der Reihenschaltung einen ersten und zweiten Brückenanschluss (X, Y) bilden, und wobei die Motorsteuereinheit (10) als Stelleinrichtung eine H-Brücke aus vier Schaltmitteln (Z1-Z4) zur Stromerregung aufweist, wobei die H-Brücke eingangsseitig mit einer ersten und zweiten Spannungsebene (GND, VCC) der Spannungsversorgungseinheit (20) und ausgangsseitig mit den beiden Brückenanschlüssen (X, Y) verbunden ist, oder
- wobei die Ankerspulen (C1, C3; C2, C4) zweier sich gegenüberliegender T-Anker (T1, T3; T2, T4) des Stators (6) jeweils in Reihe geschaltet sind oder wobei die Ankerspulen (C1, C2; C3, C4) zweier benachbarter T-Anker (T1, T2; T3, T4) und die beiden verbleibenden Ankerspulen (C3, C4; C1, C2) in Reihe geschaltet sind, wobei jeweils ein Ende der Reihenschaltungen einen gemeinsamen Motoranschluss (G) und die beiden verbleibenden Enden der Reihenschaltungen einen ersten und zweiten Gegentaktanschluss (U, V) bilden, und wobei die Motorsteuereinheit (10) als Stelleinrichtung zwei im Gegentakt ansteuerbare Schaltmittel (S1, S2) aufweist, wobei jeweils ein Schaltkontakt der beiden Schaltmittel (S1, S2) mit einer ersten Spannungsebene (GND, VCC) der Spannungsversorgungseinheit (20) verbunden ist, wobei eine zweite Spannungsebene (VCC, GND) mit dem gemeinsamen Motoranschluss (G) verbunden ist und wobei die beiden Gegentaktanschlüsse (U, V) mit den verbleibenden Schaltkontakten der beiden Schaltmittel (S1, S2) verbunden sind.

2. Stellantrieb nach Anspruch 1,
- wobei die Ankerspulen (C1, C3; C2, C4) zweier sich gegenüberliegender T-Anker (T1, T3; T2, T4) des Stators (6) jeweils in Reihe geschaltet sind oder wobei die Ankerspulen (C1, C2; C3, C4) zweier benachbarter T-Anker (T1, T2; T3, T4) und die beiden verbleibenden Ankerspulen (C3, C4; C1, C2) in Reihe geschaltet sind,
- wobei die Motorsteuereinheit (10) eine Steuereinrichtung (11) aufweist, von der die beiden Schaltmittel (S1, S2) getaktet ansteuerbar sind,
- wobei die Motorsteuereinheit (10) eine Stromerfassungseinrichtung (MI) für einen Motorstrom (iM) in den Motoranschluss (G) und zum Bereitstellen eines jeweiligen Strommesswerts (IM) für die Steuereinrichtung (11) aufweist, und
- wobei die Steuereinrichtung (11) zur Durchführung eines SFOC-Verfahrens für die Ermittlung der Drehstellung des Rotors (7) durch Auswerten der erfassten jeweiligen Strommesswerte (IM) eingerichtet ist.

3. Stellantrieb nach Anspruch 1 oder 2,
- wobei die Ankerspulen (C1, C3; C2, C4) zweier sich gegenüberliegender T-Anker (T1, T3; T2, T4) des Stators (6) jeweils in Reihe geschaltet sind oder wobei die Ankerspulen (C1, C2; C3, C4) zweier benachbarter T-Anker (T1, T2; T3, T4) und die beiden verbleibenden Ankerspulen (C3, C4; C1, C2) in Reihe geschaltet sind,
- wobei die Motorsteuereinheit (10) eine Steuereinrichtung (11) aufweist, von der die beiden Schaltmittel (S1, S2) getaktet ansteuerbar sind,
- wobei die Motorsteuereinheit (10) je eine Spannungsmesseinrichtung (MU) für eine jeweilige an den Gegentaktanschlüssen (U, V) anliegende Gegentaktspannung (uU, uV) und zum Bereitstellen jeweiliger Spannungsmesswerte (UU, UV) für die Steuereinrichtung (11) aufweist, und
- wobei die Steuereinrichtung (11) zur Durchführung eines SBLDC-Verfahrens für die Ermittlung der Drehstellung des Rotors (7) durch Auswerten der erfassten jeweiligen Spannungsmesswerte (UU, UV) eingerichtet ist.

4. Stellantrieb nach einem der vorherigen Ansprüche, mit einem signal- oder datentechnisch mit der Motorsteuereinheit (10) verbundenen Magnetfeldsensor (8) zur Ermittlung der Drehstellung des Rotors (7) auf Basis der magnetisch erfassten, in Umfangsrichtung abwechselnden Permanentmagnetpole (N, S) .

5. Stellantrieb nach Anspruch 4, wobei der Magnetfeldsensor (8) derart angeordnet ist, dass im stromlosen Zustand des Gleichstrommotors (3) ein jeweiliges, von den Permanentmagneten N, S) erzeugtes Magnetfeld am Ort des Magnetfeldsensors (8) maximal ist.

6. Stellantrieb nach Anspruch 4 oder 5, wobei der Magnetfeldsensor (8) ein digitaler Hallsensor mit Schalthysterese ist.

7. Stellantrieb nach einem der vorherigen Ansprüche 1 bis 6, wobei die Motorsteuereinheit (10) dazu eingerichtet ist, den aktuell eingestellten Motorstrom (iM) auf einen ersten Haltestromwert (H1) zu reduzieren, wenn bei vorgegebener Drehrichtung eine erste Solldrehstellung erreicht ist oder wenn keine Änderung der erfassten oder ermittelten Drehstellung des Rotors mehr detektierbar ist.

8. Stellantrieb nach einem der Ansprüche 1 bis 6, wobei die Motorsteuereinheit (10) dazu eingerichtet ist,
- einen aktuell eingestellten Motorstrom (iM) schrittweise zu reduzieren, falls bei vorgegebener Drehrichtung keine Änderung der erfassten oder ermittelten Drehstellung des Rotors (7) mehr detektierbar ist, und
- den Motorstrom (iM) solange auf einen Absenkstromwert (R) zu reduzieren, bis wieder eine Änderung der Drehstellung des Rotors (7) detektierbar ist, um dann den Motorstrom (iM) auf einen zweiten Haltestromwert (H2) als Summe des Absenkstromwertes (R) zuzüglich eines Sicherheitsstromwertes (ΔM) einzustellen.

9. Stellantrieb nach einem der Ansprüche 1 bis 6, wobei die Motorsteuereinheit (10) dazu eingerichtet ist,
- einen aktuell eingestellten Motorstrom (iM) schrittweise zu reduzieren, wenn bei vorgegebener Drehrichtung keine Änderung der erfassten oder ermittelten Drehstellung des Rotors (7) mehr detektierbar ist,
- den Motorstrom (iM) solange auf einen Absenkstromwert (R) zu reduzieren, bis wieder eine Änderung der Drehstellung des Rotors (7) detektierbar ist, und
- den Motorstrom (iM) dann solange zu erhöhen, bis wieder eine Änderung der Drehstellung des Rotors (7) detektierbar ist, um dann den Motorstrom (iM) auf einen zweiten Haltestromwert (H2) als Summe des Absenkstromwertes (R) zuzüglich eines Sicherheitsstromwertes (ΔM) einzustellen.

10. Stellantrieb nach einem der vorherigen Ansprüche, wobei die Motorsteuereinheit (10) eine Steuereinrichtung (11) aufweist, von der die Schaltmittel (S1, S2; Z1-Z4) getaktet ansteuerbar sind, wobei die Steuereinrichtung (11) dazu eingerichtet ist, den durch die Ankerspulen (C1-C4) fliessenden Motorstrom (iM) durch eine überlagerte pulsweitenmodulierte Ansteuerung der Schaltmittel (S1, S2; Z1-Z4) auf einen vorgegebenen Stromsollwert einzustellen.

11. Stellantrieb nach einem der vorherigen Ansprüche, wobei die Spannungsversorgungseinheit (20) einen eingangsseitigen Anschluss zum Anschliessen an ein Stromversorgungsnetz oder an einen elektrischen Energiespeicher aufweist.

## Claims

1. Actuator drive for a flap (2) or for a valve for setting a gaseous or liquid volume flow, in particular for the heating, ventilation or air conditioning of a building, having a DC motor (3), having a reduction gear (4) connected downstream, and having a gearbox-side output (5) for the flap (2) or for the valve,
wherein the actuator drive has a motor control unit (10) for actuating the DC motor (3) and a voltage supply unit (20), wherein the DC motor (3) is a brushless two-phase DC motor which has a stator (6) embodied as a quadruple T armature with in each case an armature coil (C1-C4) and a radially outwardlying rotor (7) which is mounted so as to be rotatable relative to the stator (6) and has precisely four alternating permanent magnetic poles (N, S) which are arranged in the circumferential direction, wherein the rotor (7) of the DC motor (3) is connected to a spring device by means of which a restoring force is applied to the rotor (7) in the event that the latter is deflected from a rest position, wherein the motor control unit (10) has electrically actuatable switching means (S1, S2; Z1-Z4) as an actuating device for the DC motor (3) in order to apply a torque having a predefinable direction of rotation, wherein the motor control unit (10) is configured to connect the armature coils (C1-C4) to the voltage supply unit (20) by way of the switching means (S1,S2; Z1-Z4) in accordance with the predefined direction of rotation and as a function of a rotational position of the rotor (7), wherein the armature coils (C1-C4) are interconnected in such a way that, when subjected to current excitation, two adjacent armature coils (C1-C4) never form magnetic poles having the same polarity,
- wherein the armature coils (C1-C4) of the T armatures (T1-T4) are collectively connected in series, wherein the two ends of the series connection form a first and second bridge terminal (X, Y), and wherein the motor control unit (10) has an H-bridge composed of four switching means (Z1-Z4) for current excitation as an actuating device, wherein the H-bridge is connected to a first and second voltage level (GND, VCC) of the voltage supply unit (20) on the input side and to the two bridge terminals (X, Y) on the output side, or
- wherein the armature coils (C1, C3; C2, C4) of two oppositely disposed T armatures (T1, T3; T2, T4) of the stator (6) are connected in series in each case or wherein the armature coils (C1, C2; C3, C4) of two adjacent T armatures (T1, T2; T3, T4) and the two remaining armature coils (C3, C4; C1, C2) are connected in series, wherein one end of the series connections in each case forms a common motor terminal (G) and the two remaining ends of the series connections form a first and second differential mode terminal (U, V), and
wherein the motor control unit (10) has two switching means (S1, S2) actuatable in push-pull mode as the actuating device, wherein one switching contact of the two switching means (S1, S2) in each case is connected to a first voltage level (GND, VCC) of the voltage supply unit (20), wherein a second voltage level (VCC, GND) is connected to the common motor terminal (G), and wherein the two differential mode terminals (U, V) are connected to the remaining switching contacts of the two switching means (S1, S2).

2. Actuator drive according to claim 1,
- wherein the armature coils (C1, C3; C2, C4) of two oppositely disposed T armatures (T1, T3; T2, T4) of the stator (6) are connected in series in each case or wherein the armature coils (C1, C2; C3, C4) of two adjacent T armatures (T1, T2; T3, T4) and the two remaining armature coils (C3, C4; C1, C2) are connected in series,
- wherein the motor control unit (10) has a control device (11) by which the two switching means (S1, S2) may be actuated in clocked mode,
- wherein the motor control unit (10) has a current measuring device (MI) for a motor current (iM) flowing into the motor terminal (G) and for providing a respective measured current value (IM) for the control device (11), and
- wherein the control device (11) is configured to perform an SFOC method for determining the rotational position of the rotor (7) by evaluating the respective sensed measured current values (IM).

3. Actuator drive according to claim 1 or 2,
- wherein the armature coils (C1, C3; C2, C4) of two oppositely disposed T armatures (T1, T3; T2, T4) of the stator (6) are connected in series in each case or wherein the armature coils (C1, C2; C3, C4) of two adjacent T armatures (T1, T2; T3, T4) and the two remaining armature coils (C3, C4; C1, C2) are connected in series,
- wherein the motor control unit (10) has a control device (11) by which the two switching means (S1, S2) may be actuated in clocked mode,
- wherein the motor control unit (10) has in each case a voltage measuring device (MU) for a respective differential mode voltage (uU, uV) present at the differential mode terminals (U, V) and for providing respective measured voltage values (UU, UV) for the control device (11), and
- wherein the control device (11) is configured to perform an SBLDC method for determining the rotational position of the rotor (7) by evaluating the respective sensed measured voltage values (UU, UV).

4. Actuator according to one of the preceding claims, having a magnetic field sensor (8) connected for signal transmission or data communication purposes to the motor control unit (10) in order to determine the rotational position of the rotor (7) on the basis of the magnetically sensed permanent magnetic poles (N, S) alternating in the circumferential direction.

5. Actuator according to claim 4, wherein the magnetic field sensor (8) is arranged in such a way that, in the currentless state of the DC motor (3), a respective magnetic field generated by the permanent magnets (N, S) is at a maximum at the location of the magnetic field sensor (8).

6. Actuator drive according to claim 4 or 5, wherein the magnetic field sensor (8) is a digital Hall-effect sensor with switching hysteresis.

7. Actuator drive according to one of claims 1 to 6, wherein the motor control unit (10) is configured to reduce the currently set motor current (iM) to a first holding current value (H1) when, given a predefined direction of rotation, a first setpoint rotational position is reached or when no further change in the sensed or determined rotational position of the rotor can be detected.

8. Actuator drive according to one of claims 1 to 6, wherein the motor control unit (10) is configured to
- reduce a currently set motor current (iM) step by step if, given a predefined direction of rotation, no further change in the sensed or determined rotational position of the rotor (7) can be detected, and
- reduce the motor current (iM) to a lowered current value (R) until such time as a change in the rotational position of the rotor (7) is detectable once more, in order then to set the motor current (iM) to a second holding current value (H2) as the sum of the lowered current value (R) plus a safety current value (ΔM).

9. Actuator drive according to one of claims 1 to 6, wherein the motor control unit (10) is configured to
- reduce a currently set motor current (iM) step by step when, given a predefined direction of rotation, no further change in the sensed or determined rotational position of the rotor (7) can be detected,
- reduce the motor current (iM) to a lowered current value (R) until such time as a change in the rotational position of the rotor (7) is detectable once more, and
- then increase the motor current (iM) until such time as a change in the rotational position of the rotor (7) is detectable once more, in order then to set the motor current (iM) to a second holding current value (H2) as the sum of the lowered current value (R) plus a safety current value (ΔM).

10. Actuator drive according to one of the preceding claims, wherein the motor control unit (10) has a control device (11) by which the switching means (S1, S2; Z1-Z4) may be actuated in clocked mode, wherein the control device (11) is configured to set the motor current (iM) flowing through the armature coils (C1-C4) by means of a superposed pulse-width-modulated actuation of the switching means (S1, S2; Z1-Z4) to a predefined setpoint current value.

11. Actuator drive according to one of the preceding claims, wherein the voltage supply unit (20) has a terminal on the input side for connecting to a power supply network or to an electrical energy store.

## Revendications

1. Actionneur pour un clapet (2) ou pour une vanne pour le réglage d'un débit volumique gazeux ou liquide, plus particulièrement pour chauffage, la ventilation ou la climatisation d'un bâtiment, avec un moteur à courant continu (3), avec un engrenage réducteur (4) branché en aval ainsi qu'avec une sortie côté engrenage (5) pour le clapet (2) ou pour la vanne, dans lequel l'actionneur comprend une unité de commande de moteur (10) pour le contrôle du moteur à courant continu (3) ainsi qu'une unité d'alimentation en tension (20), dans lequel le moteur à courant continu (3) est un moteur à courant continu deux phases sans balais, qui comprend un stator (6) conçu comme une armature à quadruple T, chacun avec une bobine d'induit (C1 - C4), et un rotor (7) logé de manière rotative par rapport au stator (6) et situé radialement à l'extérieur, avec exactement quatre pôles magnétiques permanents (N, S) disposés dans la direction circonférentielle et alternés, dans lequel le rotor (7) du moteur à courant continu (3) est relié avec un dispositif à ressort au moyen duquel le rotor (7), dans le cas où il est dévié d'une position de repos, est sollicité avec une force de rappel, dans lequel l'unité de commande de moteur (10) comprend des moyens de commutation (S1, S2 ; Z1 - Z4), contrôlables électriquement, en tant que dispositif de réglage pour le moteur à courant continu (3), pour l'application d'un couple avec un sens de rotation pouvant être prédéterminé, dans lequel l'unité de commande du moteur (10) est conçue pour brancher les bobines d'induit (C1 - C4) en fonction du sens de rotation prédéterminé ainsi qu'en fonction d'une position de rotation du rotor (7), par l'intermédiaire des moyens de commutation (S1, S2 ; Z1 - Z4) à l'unité d'alimentation en tension (20), dans lequel les bobines d'induit (C1 - C4) sont branchées entre elles de façon à ce que deux bobines d'induit (C1 - C4) adjacentes ne forment jamais, lors d'une excitation électrique, des pôles magnétiques de même polarité,
- dans lequel les bobines d'induit (C1 - C4) de l'armature en T (T1 - T4) sont branchées ensemble en série, dans lequel les deux extrémités du branchement en série constituent une première et une deuxième connexion en pont (X, Y) et dans lequel l'unité de commande du moteur (10) comprend, en tant que dispositif de réglage, un pont en H constitué de quatre moyens de commutation (Z1 - Z4) pour l'excitation électrique, dans lequel le pont en H est relié, côté entrée, avec un premier et un deuxième niveaux de tension (GND, VCC) de l'unité d'alimentation en tension (20) et, côté sortie, avec les deux connexions en pont (X, Y) ou
- dans lequel les bobines d'induit (C1, C3 ; C2, C4) de deux armatures en T (T1, T3 ; T2, T4) opposées du stator (6) sont branchées en série ou dans lequel les bobines d'induit (C1, C2 ; C3, C4) de deux armatures en T (T1, T3 ; T2, T4) adjacentes et les deux bobines d'induit (C3, C4 ; C1, C2) restantes sont branchées en série, dans lequel une extrémité des branchements en série constitue un raccordement de moteur commun (G) et les deux extrémités restantes des branchements en série constituent un premier et un deuxième raccordements en push-pull (U, V) et dans lequel l'unité de commande du moteur (10) comprend, en tant que dispositif de réglage, deux moyens de commutation (S1, S2) contrôlables en push-pull, dans lequel chacun des contacts de commutation des deux moyens de commutation (S1, S2) est relié avec un premier niveau de tension (GND, VCC) de l'unité d'alimentation en tension (20), dans lequel un deuxième niveau de tension (VCC, GND) est relié avec le raccordement de moteur commun (G) et dans lequel les deux raccordements en push-pull (U, V) sont reliés avec les contacts de commutation restants des deux moyens de commutation (S1, S2).

2. Actionneur selon la revendication 1
- dans lequel les bobines d'induit (C1, C3 ; C2, C4) de deux armatures en T (T1, T3 ; T2, T4) opposées du stator (6) sont branchées en série ou dans lequel les bobines d'induit (C1, C2 ; C3, C4) de deux armatures en T (T1, T3 ; T2, T4) adjacentes et les deux bobines d'induit restantes (C3, C4 ; C1, C2) sont branchées en série,
- dans lequel l'unité de commande du moteur (10) comprend un dispositif de commande (11) grâce à laquelle les deux moyens de commutation (S1, S2) peuvent être contrôlés de manière cadencée,
- dans lequel l'unité de commande du moteur (10) comprend un dispositif de mesure de courant (MI) pour un courant de moteur (iM) dans le raccordement de moteur (G) et pour la mise à disposition d'une valeur de mesure de courant (IM) pour le dispositif de commande (11) et
- dans lequel le dispositif de commande (11) est conçu pour l'exécution d'un procédé SFOC pour la détermination de la position de rotation du rotor (7) grâce à l'analyse des valeurs de mesure du courant (IM) respectives.

3. Actionneur selon la revendication 1 ou 2,
- dans lequel les bobines d'induit (C1, C3 ; C2, C4) de deux armatures en T (T1, T3 ; T2, T4) opposées du stator (6) sont branchées en série ou dans lequel les bobines d'induit (C1, C2 ; C3, C4) de deux armatures en T (T1, T2 ; T3, T4) adjacentes et les deux bobines d'induit restantes (C3, C4 ; C1, C2) sont branchées en série,
- dans lequel l'unité de commande du moteur (10) comprend un dispositif de commande (11) grâce à laquelle les deux moyens de commutation (S1, S2) peuvent être contrôlés de manière cadencée,
- dans lequel l'unité de commande du moteur (10) comprend un dispositif de mesure de tension (MU) pour une tension push-pull (uU, uV) respective appliquée aux raccordements en push-pull (U, V) et pour la mise à disposition de valeurs de mesure de tension (UU, UV) respectives pour le dispositif de commande (11) et
- dans lequel le dispositif de commande (11) est conçu pour l'exécution d'un procédé SBLDC pour la détermination de la position de rotation du rotor (7) grâce à l'analyse des valeurs de mesure de tension (UU, UV) respectives.

4. Actionneur selon l'une des revendications précédentes, avec un capteur de champ magnétique (8), relié à l'aide de signaux ou d'une liaison de données avec l'unité de commande du moteur (10), pour la détermination de la position de rotation du rotor (7) sur la base des pôles magnétiques permanents (N, S) détectés magnétiquement et alternés dans la direction circonférentielle.

5. Actionneur selon la revendication 4, dans lequel le capteur de champ magnétique (8) est disposé de façon à ce que, dans l'état sans courant du moteur à courant continu (3), un champ magnétique correspondant, généré par les aimants permanents (N, S), au niveau du capteur de champ magnétique (8), est maximal.

6. Actionneur selon la revendication 4 ou 5, dans lequel le capteur de champ magnétique (8) est un capteur à effet Hall numérique avec une hystérésis de commutation.

7. Actionneur selon l'une des revendications précédentes 1 à 6, dans lequel l'unité de commande du moteur (10) est conçue pour réduire le courant de moteur (iM) actuellement réglé à une première valeur de courant de maintien (H1) lorsque, pour un sens de rotation prédéterminé, une première position de rotation de consigne est atteinte ou lorsqu'une modification de la position de rotation, mesurée ou déterminée, du rotor n'est plus détectable.

8. Actionneur selon l'une des revendications précédentes 1 à 6, dans lequel l'unité de commande du moteur (10) est conçue
- pour réduire le courant de moteur (iM) actuellement réglé par étapes si, pour un sens de rotation prédéterminé, une modification de la position de rotation, mesurée ou déterminée, du rotor (7) n'est plus détectable et
- pour réduire le courant de moteur (iM) à une valeur de courant de diminution (R) jusqu'à ce qu'une modification de la position de rotation du rotor (7) soit à nouveau détectable, afin de régler ensuite le courant de moteur (iM) à une deuxième valeur de courant de maintien (H2), qui est la somme de la valeur de courant de diminution (R) plus une valeur de courant de sécurité (ΔM).

9. Actionneur selon l'une des revendications précédentes 1 à 6, dans lequel l'unité de commande du moteur (10) est conçue
- pour réduire le courant de moteur (iM) actuellement réglé par étapes lorsque, pour un sens de rotation prédéterminé, une modification de la position de rotation, mesurée ou déterminée, du rotor (7) n'est plus détectable,
- pour réduire le courant de moteur (iM) à une valeur de courant de diminution (R) jusqu'à ce qu'une modification de la position de rotation du rotor (7) soit à nouveau détectable, et
- pour augmenter le courant de moteur (iM) jusqu'à ce qu'une modification de la position de rotation du rotor (7) soit à nouveau détectable afin de régler ensuite le courant de moteur (iM) à une deuxième valeur de courant de maintien (H2), qui est la somme de la valeur de courant de diminution (R) plus une valeur de courant de sécurité (ΔM).

10. Actionneur selon l'une des revendications précédentes, dans lequel l'unité de commande du moteur (10) comprend un dispositif de commande (11) grâce auquel les moyens de commutation (S1, S2 ; Z1 - Z4) peuvent être contrôlés de manière cadencée, dans lequel le dispositif de commande (11) est conçu pour régler le courant de moteur (iM) circulant à travers les bobines d'induit (C1 - C4), à l'aide d'un contrôle modulé par largeur d'impulsions superposé des moyens de commutation (S1, S2 ; Z1 - Z4), à une valeur de courant de consigne prédéterminée.

11. Actionneur selon l'une des revendications précédentes, dans lequel l'unité d'alimentation en tension (20) comprend un raccordement côté entrée pour le raccordement à un réseau d'alimentation en courant ou à un accumulateur d'énergie électrique.
